# EUROPEAN PATENT SPECIFICATION

(11) **EP 1 979 902 B1**
(45) Date of publication and mention of the grant of the patent: **15.07.2009**
(21) Application number: 07701839.8
(22) Date of filing: 29.01.2007
(51) Int. Cl.: G11B 7/26

(54) **METHOD AND DEVICE FOR HOLDING AND CENTERING OF SUBSTRATES**
VERFAHREN UND EINRICHTUNG ZUM HALTEN UND ZENTRIEREN VON SUBSTRATEN
PROCEDE ET DISPOSITIF DE MAINTIEN ET DE CENTRAGE DE SUBSTRATS

(30) Priority: 30.01.2006 US 763325 P
(43) Date of publication of application: 15.10.2008
(73) Proprietor: Singulus Technologies AG, 63796 Kahl am Main (DE)
(72) Inventor: EDENHOFER, Georg, 81541 München (DE); BAZLEN, Rolf, CH-9400 Rorschach (CH)
(74) Representative: Vossius & Partner
(86) International application number: PCT/CH2007/000032
(87) International publication number: WO 2007/085104

(56) References cited:
- EP-A1- 0 793 224
- EP-A2- 0 833 315
- JP-A- 4 057 234
- US-A1- 2005 173 072

## Description

The invention relates to a device for holding substrates with a center hole, especially disk shaped substrates such as optical storage disks like CD, DVD.

### Background of the invention

In most optical disk formats the information is stored in a linear track that is either spiralling from inside to outside or the other way round. It is arranged on the surface of a moulded disk hereinafter called substrate. During several production steps the disc has to be held, deposited in or taken from processing stations.
In a reading device a disk will be centered using a cone adapted in size to the disk's center hole. The reading device is reading the data using the reflection of a laser beam that is focused onto the "Data spiral" The eccentricity of the virtual centre of the "data spiral" and the centre of the hole of the disk must be smaller or equal than it is given in the specification for the format. The specification refers to this eccentricity as "Radial Runout" that is twice the eccentricity as it is defined above because "Radial Runout" measures the peak to peak radial variation of the "Data spiral"; for single layer formats it depends only on the moulded plastic substrate.

Dual Layer Format Disk will be manufactured by glueing two substrates together on their flat sides; a process generally called "bonding". It is a crucial feature of a Dual Layer Disk that both substrates can be read from one side. That is achieved by designing one "data spiral" to be semitransparent so that the incident laser beam can reach the other "data spiral" that is lying behind. Such a Dual Layer Disk will also be centered in a reading device by a cone. For the semitransparent substrate the situation is the same as for a single layer disk. For having a small Radial Runout on the second data spiral the hole of the substrate must be as concentric as possible with the hole of the semi transparent substrate. The problem therefore is to find a reliable, quick and inexpensive method and device to align two substrates which both show a center hole with a defined diameter of the same size.
For HD-DVD and DVD-R the Radial Runout is defined to be less than 70 µm, that means that the centre of the holes of the substrates are allowed to vary less than 35 µm against each other. The "misalignment" of the substrates is not the only source of eccentricity therefore in practice the allowed "misalignment" must be defined even smaller e.g. half this size, 17µm.

In Prior Art this bonding is made by using a UV curable adhesive. After joining the two substrates the adhesive has not yet cured, the bonding therefore is still laterally relocatable. The centering of the substrates during the curing procedure of the glue (UV light) can be achieved with different centering measures. Amongst others this can be a pin with variable diameter, such as an inflatable mandrel made of an elastomer or a cylindrical pin with a precisely defined diameter or an active mechanical element, which can expand radially like a threefold clamp bolt. All three Prior Art solutions will centrally align the two bonded substrates.

If using a cone (pin) with a diameter according to the specifications, this cylindrical pin must be very close to the hole diameter of the substrates to fulfill the intended purpose, but not as big that other parameters of the finished manufactured disk will be affected. Since there is a certain tolerance window for the size of the center hole, the pin must be found individually for each manufacturing system. Likewise a great effort has to be made to align the system. Current available systems are therefore prone to contamination by excess bonding glue leaking from the central joint and this requires regular maintenance. The possible achievable Radial Runout seems to be just sufficient for the DVD9 prerecorded format but it cannot fulfil the requirements of the coming HD-DVD Dual Layer Formats, or the currently marketed DVD-R Dual Layer Formats.

The document JP-A-4 057 234 discloses the preamble of the claim 1.

### Solution according to the invention

In a first aspect of the invention a design for a centering pin is proposed, which avoids the problems known in the Art. In a second aspect of the invention a method to actuate said pin is described which additionally allows an increased flexibility and reliability in using said pin. A third aspect is engaged with the use of the invention in a curing application thereby ensuring that the centering of the bonded substrates remains during and after the curing and thereby enhances the yield of this production step.

### Brief description of the drawings

Figure 1 illustrates an inventive centering pin arrangement.
Figure 2 shows a preferred embodiment of an inventive pin arrangement.
Figure 3A shows an embodiment of a centering pin arrangement with actuator.
Figur 3B shows an enlarged detail A of fig. 3A.
Figure 4 shows in cross section an inventive centering pin arrangement 1 integrated in a DVD production line.
Figure 5 shows a top view on such integrated DVD production line.
Figure 6A shows the geometrical properties for a bolt according to the invention
Figure 6B shows the geometrical properties for an alternative bolt according to the invention

### Detailed description of the embodiments

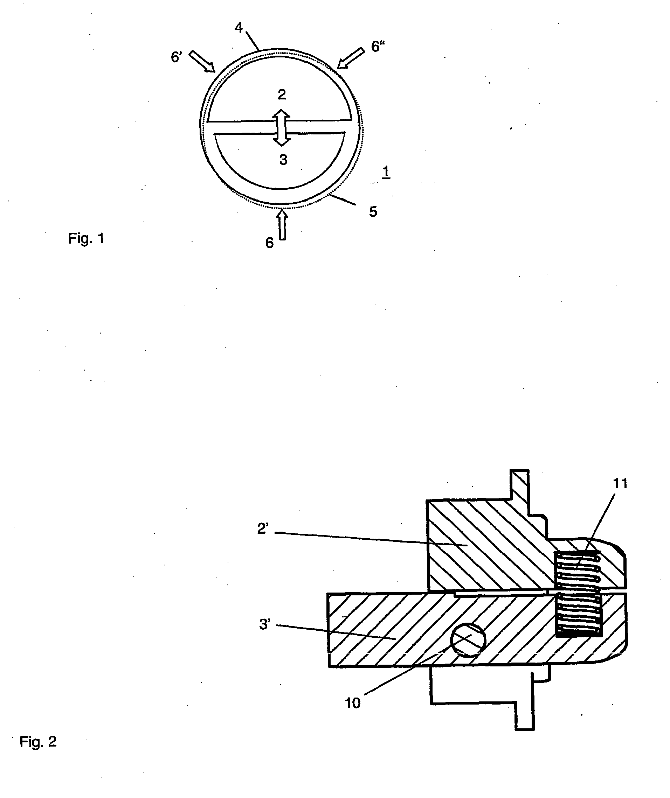

Figure 1 illustrates schematically an inventive centering pin arrangement 1. Two substrates are preliminarily joined by not yet cured adhesive; therefore the respective center holes are not aligned. This displacement is indicated by dotted line 5 vs. continous line 4. The centering pin comprises two bolts 2, 3 with essentially semicircular cross section, or more precise with a cross section of a segment of a circle. It is important to note that at least one of the bolts has a diameter bigger or equal to the diameter of the center hole, which is in case of usual optical media, 15.15 mm. The specification for the center hole of such media allows a variation of the diameter beween 15.0 to 15.15 mm.
In an application for centering substrates for a DVD, the radius of bolt 2 is 15.15 mm and for bolt 3 15.00 mm.

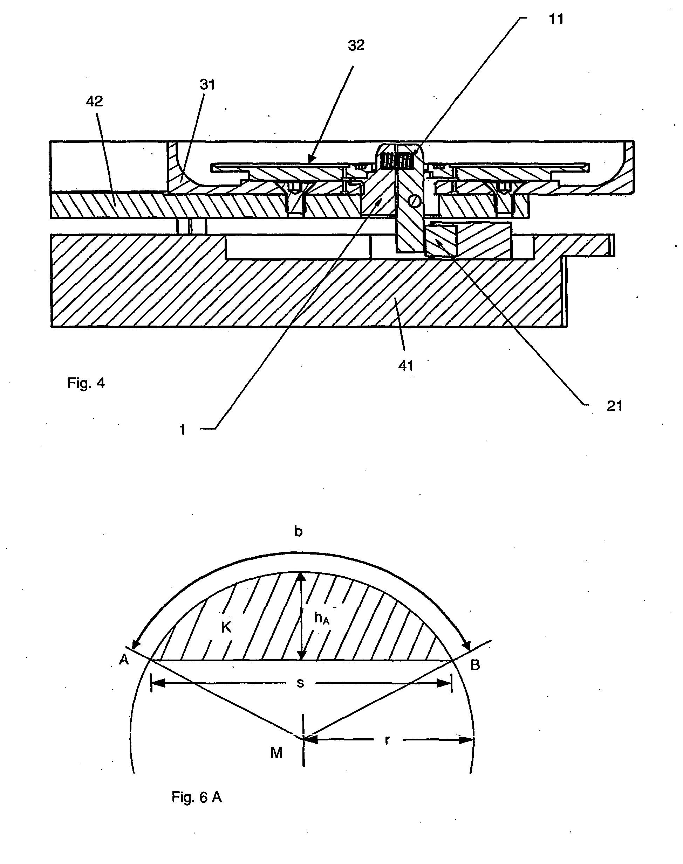

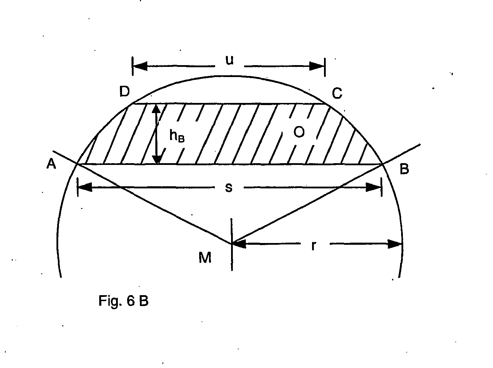

In order to illustrate the geometry, Fig. 6A shows a segment of a circle. A circle with radius r has a center M. Points A and B on the circumference of said circle mark a chord s and further delimit a section of a circular arc b. The segment has a maximum height h_{A}. Area K represents a cross-section of said bolts 2 and 3. In order to fulfill the inventive purpose, bolt 2 and 3 show different radii r, hereinafter referred to as r₂ and r₃. If rₘₐₓ represents the radius of the center hole, then according to an embodiment of the invention it shall apply: r₂ > rₘₐₓ and r₃ < rₘₐₓ or vice versa r₃ > rₘₐₓ and r₂ < rₘₐₓ. In another embodiment of the inventive pin arrangement it shall apply: r₂ > rₘₐₓ and r₃ > rₘₐₓ. It is clear from the geometrical proportions that for bolts with the condition r > rₘₐₓ at the same time must be valid s < 2 rₘₐₓ, otherwise the substrate to be centered would not fit over the bolt(s). Besides these basic reqirements it is clear that height h_{A} must and can be varied according to the mechanical needs. A variant of the described embodiment for bolts is illustrated in fig. 6B. The segment of the circle shows a further chord u between points D and C, parallel to chord s. The distance between u and s is named h_{B}. The cross section of a bolt according to this variant is represented by area O. The description above is valid mutatis mutandis.
The advantage of such embodiment is that one can realize a three point support or four point support for the substrates to be centered. The substrates to be centered will be touched on the curved sections of bolts 2 and 3, which will avoid loading forces to a sharp point of contact only. By far preferred is a three point support.

Figure 1 shows pin arrangement 1 in position "release", therefore the non-centered substrates can be put over bolts 2 and 3. For the centering operation bolt 2 or bolt 3 or both are moved in the direction indicated by the double arrow in figure 1 and thereby will center the substrates such that the center holes are congruent within the specification for the disk. When in position "hold" the two bolts touch the inner edges of the aligned substrates in at least three points, indicated by arrows 6, 6' and 6". Depending on the ratio of radii bolt 2 may touch the edge of the center hole on a section between position of arrow 6' and 6". The radii of bolt 2 and 3 may be varied within the scope of the invention according to the technical requirements.

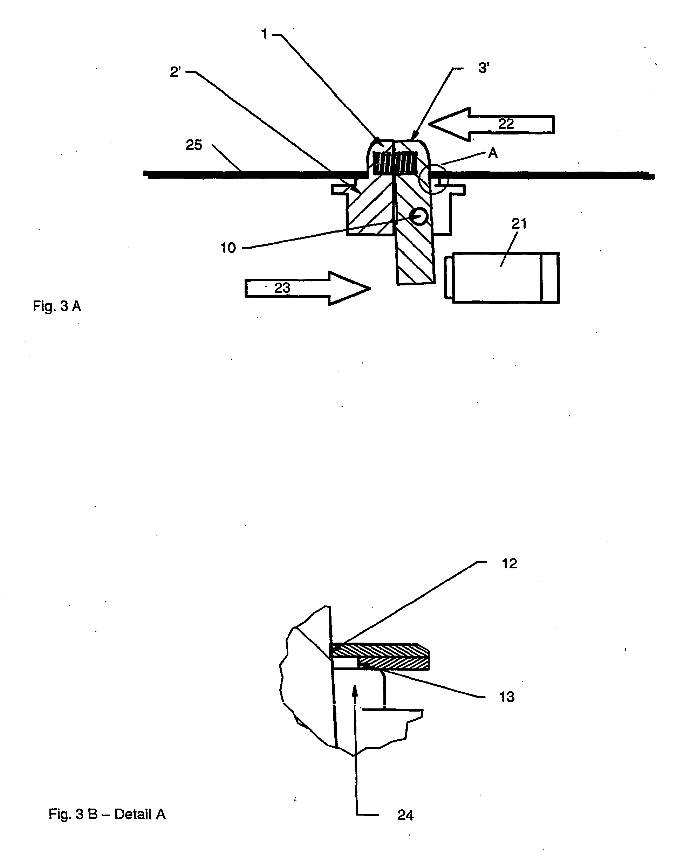

Figure 2 shows a preferred embodiment of an inventive pin arrangement. Bolts 2' and 3' fulfill the function described above for features 2 and 3. Here bolt 2' is designed as a fixed element, whereas bolt 3' is movable around a pivot point 10. Spring means 11 allow holding the disk 25 (fig. 3A) without the aid of a motor. Of course alternative actuators can be realized, such as pneumatic cylinders, electromagnets and others.

Fig. 3A shows the second aspect of the invention, the actuating means 21, e. g. a magnet (preferably a permanent magnet or electromagnet). Disc 25 rests on centering pin arrangement 1. If the actuating means 21 is present/turned on, it will attract the lower part of bolt 3' in the direction of arrow 23. This movement affects a movement of top part of bolt 3' in the direction of arrow 22. The spring means 11 is being compressed and thus the pin arrangement 1 is in "release" position. Figur 3B shows an enlarged detail A of fig. 3A. The unaligned disk 24 comprising substrates 12 and 13 rests on a pin arrangement in "release" position. The use of a permanent magnet or electromagnet has the further advantage to be contact-free and to produce only few particles, if any.

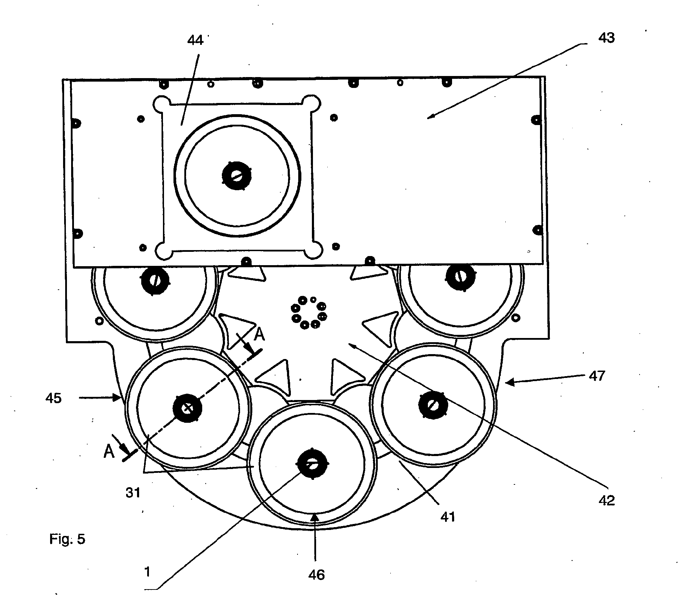

An inventive centering pin arrangement 1, integrated in a DVD production line is shown in cross section in Figur 4. This cross section is a cut-out along line A-A' in figure 5. This retainer for a disk also comprises a cup 31 forming part of a turntable 42 or a lever or a swing arm. The disk / substrates to be processed are being held by a vacuum suction device (not shown) on a support 32. The substrates will be centered actively when they are arranged on the support 32. The pin arrangement 1 has a small effective diameter during handover that allows easy alignment and allows the disk to settle well on the resting surface/support 32. It is necessary that the disk rests flat on the support 32, otherwise the flatness requirements for the disk cannot be achieved. After handover the pin expands and forces the holes to match as good as possible. For the next handover, e. g. after curing, the expandable Pin will be retracted again.

Figure 5 shows a top view on said integrated DVD production line. A turntable 42 holds several cups 31 with pin arrangements 1 each. Part of the turntable is overlapped by cover 43, which again exhibits a recess that allows access to disk resting on support 32 in cups 31. Turntable 32 allows arranging the disks sequentially under recess 44. At the position of recess 44 processing equipment may be arranged. In a preferred embodiment recess 41 holds a UV-lamp, a flash light or infrared device allowing curing the disks. However, recess 44 also could hold measuring equipment adopted for quality assurance.

Referring to the function principle of the actuating means 21 interacting with centering pin arrangement 1 as shown especially in figures 4 and 5 it is clear, that actuating means 21 can be fixedly arranged at base 41 whereas the pin arrangement 1 rests with cups 31. This way, the holding / centering function can be decoupled from the releasing / holding functionality of actuating means 21. A preferred embodiment could be as follows. At position 45 in figure 5 a bonded, but still not centered and not yet cured disk is inserted. To ensure that pin arrangement 1 is in "release" position, a permanent magnet is arranged underneath the turntable in base 41 at position 45 ensuring that pin arrangement 1 is always open if a cup 31 comes to position 45. With a turn in clockwise direction the disk will reach recess 44 and will be processed. Further clockwise movement directs the disk to position 47. An electromagnet positioned in base 41 under the turntable in position 47 will actuate the pin arrangement only if the disk has been processed successfully. If not, the disk will proceed to position 46 and again a permanent magnet will ensure that pin arrangement 1 is in "release" condition to unload the rejected disk. Of course in this special arrangement the "always release" condition could be also achieved by a nose, which protrudes such that bolt 3' is being actuated in direction 23.

An especially preferred embodiment is the use of the a. m. elements for curing applications with UV light. Since the disk is being held centrally and firmly during curing and is resting flat on support 32, warping effects are reduced or a misalignment of the substrates can be prevented.

### Further advantages of the invention

A major advantage of the invention is that the pin arrangement as described does not mandatorily need an additional moving mechanical or electrical device to open or close it. Instead, the movement is realized without mechanical contact, preferably with a permanent magnet. The abdication of electrical, pneumatic or mechanical drives and components allows saving cost.

A magnet actuating the centering mechanism of the pin arrangement does not cause abrasion or wear, which again reduces the need to replace worn or broken components. Furthermore it generates no particles that pollute the plant and affect the quality of the disk.

The contactless mechanism prevents also the transmission of impulses or vibrations, which can lead to substantial problems when a disk is being handled. The Influence of impulses and vibrations is respectable at high speeds of the disk handler.

The very compact embodiment needs little only installation space. Therefore it is able to integrate the pin in existing handlings, turntables or other building groups.

Moreover the functionality of the pin arrangement is not limited to centering applications. Basically it can be used also as a simple clamping and holding device for single substrate disks also.

## Claims

1. A centering pin arrangement for clamping a substrate with a hole with radius rₘₐₓ, said arrangement comprising two bolts (2, 3), each having an essentially semicircular cross section K delimited by a chord s and a section of a circular arc b, said bolts having radii r₂ and r₃ respectively, **characterized in that** said radii r₂ and r₃ are different and **in that** at least one of the bolts (2, 3) has a radius bigger or equal to the radius rₘₐₓ of the hole.

2. A pin arrangement according to claim 1, wherein both radii r₂ and r₃ are bigger than the radius rₘₐₓ of the hole.

3. A pin arrangement according to claim 1 or 2, wherein at least one of the bolts' (2, 3) semicircular cross section O is being delimited by a further chord u between points D and C, parallel to chord s.

4. A pin arrangement according to claim 1-3, wherein a three point support or four point support is effected.

5. A pin arrangement according to claims 1-4 wherein the substrate will be touched on the curved sections of the bolts.

6. A pin arrangement according to claims 1-5, wherein one bolt (2') is designed as a fixed element and the other bolt (3') is movable around a pivot point (10).

7. A pin arangement according to claim 1-6, wherein an actuating means (21) acts on at least one of said bolts (2', 3') for an release or hold operation.

8. A pin arrangement according to claim 7, wherein said actuating means (21) is a permanent magnet, electromagnet or a pneumatic cylinder.

9. Use of a pin arrangement according to claim 1-8 for centering two substrates.

10. DVD production line with a pin arrangement according to claims 1-8

## Patentansprüche

1. Zentrierstiftanordnung zum Aufspannen eines Substrats mit einem Loch mit Radius rₘₐₓ, wobei die Anordnung zwei Bolzen (2, 3) aufweist, die jeweils einen im wesentlichen halbkreisförmigen Querschnitt K aufweisen, der durch eine Sehne s und einen Abschnitt eines Kreisbogens b begrenzt ist, wobei die Bolzen Radien r₂ bzw. r₃ aufweisen, **dadurch gekennzeichnet, daß** sich die Radien r₂ und r₃ unterscheiden und daß mindestens einer der Bolzen (2, 3) einen Radius aufweist, der größer oder gleich dem Radius rₘₐₓ des Loches ist.

2. Stiftanordnung nach Anspruch 1, wobei beide Radien r₂ und r₃ größer als der Radius rₘₐₓ des Loches sind.

3. Stiftanordnung nach Anspruch 1 oder 2, wobei mindestens ein halbkreisförmiger Querschnitt O der Bolzen (2, 3) durch eine weitere Sehne u zwischen Punkten D und C parallel zur Sehne s begrenzt wird.

4. Stiftanordnung nach Anspruch 1-3, wobei eine Dreipunkthalterung oder Vierpunkthalterung bewirkt wird.

5. Stiftanordnung nach Anspruch 1-4, wobei das Substrat an den gekrümmten Abschnitten der Bolzen berührt wird.

6. Stiftanordnung nach Anspruch 1-5, wobei ein Bolzen (2') als ein festes Element gestaltet ist und der andere Bolzen (3') um einen Drehpunkt (10) beweglich ist.

7. Stiftanordnung nach Anspruch 1-6, wobei für einen Freigabe- oder Haltevorgang eine Betätigungseinrichtung (21) auf mindestens einen der Bolzen (2', 3') wirkt.

8. Stiftanordnung nach Anspruch 7, wobei die Betätigungseinrichtung (21) ein Permanentmagnet, Elektromagnet oder ein pneumatischer Zylinder ist.

9. Verwendung einer Stiftanordnung nach Anspruch 1-8 zur Zentrierung zweier Substrate.

10. DVD-Fertigungsstraße mit einer Stiftanordnung nach den Ansprüchen 1-8.

## Revendications

1. Agencement de broches de centrage pour fixer un substrat avec un orifice doté d'un rayon rₘₐₓ, ledit agencement comprenant deux boulons (2, 3) possédant chacun une coupe transversale K essentiellement semi-circulaire délimitée par une cordes et une section d'un arc circulaire b, lesdits boulons ayant respectivement les rayons r₂ et r₃, **caractérisé en ce que** lesdits rayons r₂ et r₃ sont différents et **en ce qu'**au moins un des boulons (2, 3) possède un rayon supérieur ou égal au rayon rₘₐₓ de l'orifice.

2. Agencement de broches selon la revendication 1, dans lequel les deux rayons r₂ et r₃ sont supérieurs au rayon rₘₐₓ de l'orifice.

3. Agencement de broches selon l'une des revendications 1 ou 2, dans lequel au moins une coupe transversale semi-circulaire O des boulons (2, 3) est délimitée par une corde supplémentaire u entre les points D et C, parallèle à la corde s.

4. Agencement de broches selon l'une des revendications 1 à 3, dans lequel un support en trois points ou un support en quatre points est assuré.

5. Agencement de broches selon l'une des revendications 1 à 4 dans lequel le substrat sera touché sur les sections incurvées des boulons.

6. Agencement de broches selon l'une des revendications 1 à 5, dans lequel un boulon (2') est conçu comme un élément fixe et l'autre boulon (3') est mobile autour d'un point de pivot (10).

7. Agencement de broches selon l'une des revendications 1 à 6, dans lequel un moyen d'actionnement (21) agit sur au moins un desdits boulons (2', 3') pour une opération de déblocage ou de blocage.

8. Agencement de broches selon la revendication 7, dans lequel ledit moyen d'actionnement (21) est un aimant permanent, un aimant électromagnétique ou un cylindre pneumatique.

9. Utilisation d'un agencement de broches selon l'une des revendications 1 à 8, pour centrer deux substrats.

10. Ligne de production de DVD avec un agencement de broches selon l'une des revendications 1 à 8.
